# EUROPÄISCHE PATENTANMELDUNG

(11) **EP 2 404 489 A1**
(43) Veröffentlichungstag der Anmeldung: **11.01.2012**
(21) Anmeldenummer: 11401535.7
(22) Anmeldetag: 23.06.2011
(51) Int. Cl.: A01B 15/18, A01B 61/04

(54) **Aufhängungsvorrichtung einer Landmaschine**

(30) Priorität: 09.07.2010 DE 102010036307
(71) Anmelder: Amazonen-Werke H. Dreyer GmbH & Co. KG, 49205 Hasbergen (DE)
(72) Erfinder: Pokriefke, Michael, 27798 Hude (DE); Tiessen, Reimer Uwe, 26135 Oldenburg (DE)

(57) **Zusammenfassung**

Aufhängungsvorrichtung einer Landmaschine zur Aufhängung eines Maschinenteiles, insbesondere eines Bodenbearbeitungswerkzeuges, mit zumindest einem das Maschinenteil tragenden Schwenkarm sowie einem sich vorzugsweise quer zur Arbeitsrichtung erstreckenden Schwenkarmträger, an dem der Schwenkarm mit einem Lagerkörper schwenkbar gelagert ist, wobei der Lagerkörper den Schwenkarmträger umgreift und zwischen dem Lagerkörper und den davon umgegriffenen Abschnitt des Schwenkarmträgers zumindest ein elastisches Lagerelement vorgesehen ist, dass sich mit seiner Längsachse im wesentlichen parallel zu der Schwenkachse des Schwenkarmes unter der Längsachse der Schwenkarmträger erstreckt und durch Schwenkbewegungen des Schwenkarmes eine zumindest teilweise Verformung erfährt. Um einen verbesserten Federkraftverlauf der von den elastischen Lagerelementen bei zunehmender Auslenkung der Schwenkarmträger zu ermöglichen, ist vorgesehen, dass die Innenkontur der Lagerkörper und die Außenkontur des Schwenkarmträgers so aufeinander abgestimmt sind, dass die von den elastischen Lagerelementen erzeugte Federkraft bei Auslegung des Schwenkarmes entgegen der Fahrtrichtung sich kein progressiver Federkraftverlauf bei sich vergrößernder Auslenkung ergibt.

## Beschreibung

Die Erfindung betrifft eine Aufhängungsvorrichtung einer Landmaschine gemäß des Oberbegriffes des Patentanspruches 1.

Eine derartige Aufhängungsvorrichtung ist beispielsweise durch die DE 42 02 771 C2 bekannt. Die normalerweise von den elastischen Lagerelementen erzeugte Federkraft verläuft bei zunehmender Auslenkung der Schwenkarmträgers progressiv, das heißt, dass am Anfang die von den elastischen Lagerelementen aufgebrachte aufgebrachte Federkraft zunächst relativ klein ist und bei stärkerer Auslenkung in stärkerem Maße ansteigt.

Der Erfindung liegt die Aufgabe zu Grunde, einen verbesserten Federkraftverlauf der von den elastischen Lagerelementen bei zunehmender Auslenkung der Schwenkarmträger zu ermöglichen.

Diese Aufgabe wird erfindungsgemäß dadurch gelöst, dass die Innenkontur der Lagerkörper und die Außenkontur des Schwenkarmträgers so aufeinander abgestimmt sind, dass die von den elastischen Lagerelementen erzeugte Federkraft bei Auslenkung des Schwenkarmes entgegen der Fahrtrichtung sich kein progressiver Federkraftverlauf bei sich vergrößernder Auslenkung ergibt. Infolge dieser Maßnahme ergibt sich ein wesentlich verbesserter Federkraftverlauf. Die Arbeitsweise der erfindungsgemäß aufgehängten und an den Schwenkarmträgern befestigten Bodenbearbeitungswerkzeuge ist wesentlich verbessert. Somit lässt sich eine wesentlich größere Auslösekraft für den Beginn des Ausweichens des Schwenkarmes, an dem die Bodenbearbeitungswerkzeuge befestigt sind, gewährleisten.

Ein besonders guter Federkraftverlauf ergibt sich dann, wenn sich bei Auslenkung des Schwenkarmes entgegen der Fahrtrichtung sich ein zumindest annähernd linearer Federkraftverlauf bei sich vergrößernder Auslenkung ergibt.

Durch eine entsprechende Ausgestaltung ist es auch möglich, dass bei Auslenkung des Schwenkarmes entgegen der Fahrtrichtung sich ein degressiver Federkraftverlauf bei sich vergrößernder Auslenkung ergibt.

Der gewünschte Federkraftverlauf lässt sich dadurch erreichen, dass der Schwenkarmträger in den Bereich, in dem die elastischen Lagerkörper an ihm anliegen, zur Erzeugung einer degressiven Federkennlinie eine konvexe Krümmung aufweisen.

Weiterhin lässt sich der gewünschte Federkraftverlauf dadurch erreichen, dass der Schwenkarmträger in den Bereich, in dem die elastischen Lagerkörper an ihm anliegen, zur Erzeugung einer linearen Federkennlinie eine konkave Krümmung aufweisen.

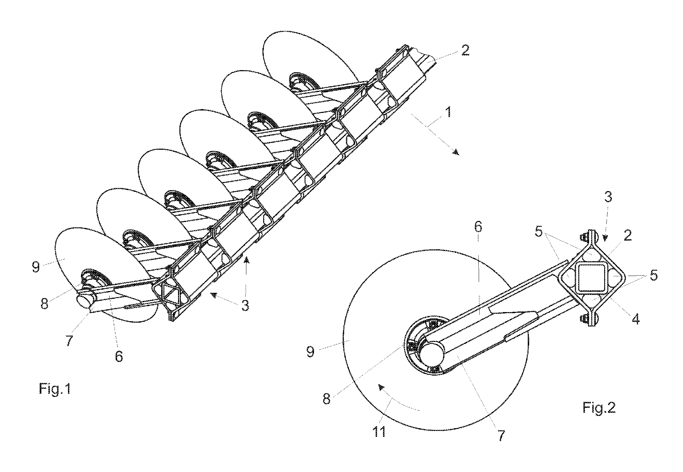

Weitere Einzelheiten der Erfindung sind der Beispielsbeschreibung und den Zeichnungen zu entnehmen. Hierbei zeigen
- Fig. 1: die an einen Schwenkarmträger mittels der Aufhängungsvorrichtungen angeordneten als Scheiben ausgebildeten Bodenbearbeitungswerkzeuge einer Scheibenegge in perspektivischer Darstellung,
- Fig. 2: die Aufhängungsvorrichtung für die Bodenbearbeitungswerkzeuge, an einem Schwenkarmträger angeordnet in Seitenansicht und vergrößertem Maßstab,
- Fig. 3: die Aufhängungsvorrichtung gemäß den Fig. 1 und 2 in vergrößertem Maßstab nach dem stand der Technik,
- Fig. 4: die Aufhängungsvorrichtung nach einer erfindungsgemäßen Ausgestaltung,
- Fig. 5: die Aufhängungsvorrichtung nach einer weiteren erfindungsgemäßen Ausgestaltung und
- Fig. 6: ein Diagramm, in welchem die Federkraftverläufe für die verschiedenen Ausgestaltungen dargestellt sind.

An einem nicht dargestellten Rahmen einer Landmaschine, die als Kurzscheibenegge ausgebildet ist, sind die quer zur Fahrtrichtung 1 verlaufenden Querträger 2 beabstandet zueinander angeordnet. An dem Rahmen der Kurzscheibenegge sind in nicht dargestellter Weise zwei Querträger 2 hintereinander, angeordnet. Mittels der Aufhängungsvorrichtungen 3 sind an den Querträgern 2 jeweils über den Lagerkörper 4 und den elastischen Lagerelementen 5 die Schwenkarme 6 nebeneinander angeordnet. An den dem Lagerkörper 4 abgewandten Ende 7 ist mittels eines Drehlagers 8 jeweils eine drehbar und schräg zur Fahrtrichtung 1 angestellte Bodenbearbeitungsscheibe 9 angeordnet. Der Schwenkarm 6 ist über den Lagerkörper 4 und den elastischen Lagerelementen 5 um eine in Längsrichtung des Querträgers 2 verlaufende Schwenkachse schwenkbar. Die Schwenkbewegung des Schwenkarmes 6 wird durch eine elastische Verformung der elastischen Lagerelemente 5, deren Längsachse ebenfalls in Längsrichtung des Querträgers 2 verlaufen, ermöglicht. Außerdem kann der Schwenkarm 6 mit dem

Bodenbearbeitungselement 9 im begrenzten Umfang durch ebenfalls elastische Verformung der elastischen Lagerelemente 5 seitlich ausweichen. Die Lagerkörper 4, welche den Querträgerträger 2 umgreifen, weisen einen vierkantförmigen Querschnitt auf. Ebenfalls weist der Schwenkarmträger 2 einen vierkantförmigen Querschnitt auf, wobei der Lagerkörper 4 gegenüber dem Profil des Querträgers 2 in der Ausgangsstellung um 45° verdreht ist, so dass sich der Zwischenraum zwischen dem Lagerkörper 4 und dem davon umgriffenen Querträger 2 in vier Lagerelementkammern 10 untergliedert. In diesen vier Lagerelementkammern 10 ist jeweils ein elastisches Lagerelement 6 angeordnet.

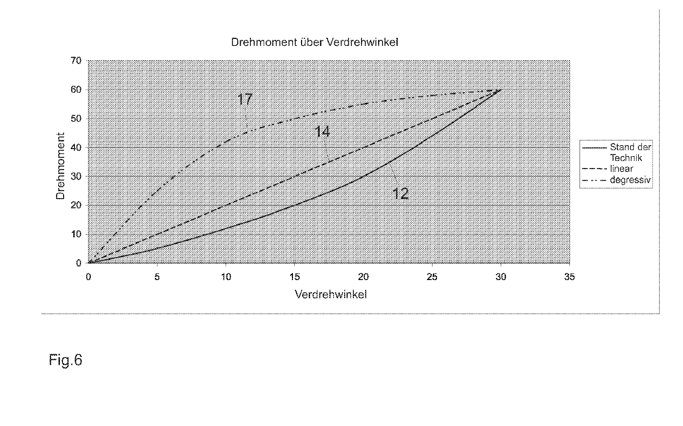

Die vorbeschriebene Ausgestaltung des Lagerkörpers aus der Aufhängungsvorrichtung sowie die Ausgestaltung des als Querträger ausgebildeten Schwenkarmträgers 2 entsprechend dem Stand der Technik. Die Innenkontur der der Lagerkörper 4 und die Außenkontur des Querträgers 2 sind hier so aufeinander abgestimmt, dass die von den elastischen Lagerelementen 5 erzeugte Federkraftverlauf 10 bei Auslenkung des Schwenkarmes 6 im Pfeilrichtung 11 entgegen der Fahrtrichtung 1 sich ein progressiver Federkraftverlauf bei sich vergrößernder Auslenkung ergibt, wie die in der Fig. 6 dargestellte Linie 12 mit durchzogenen Linien gemäß dem Stand der Technik zeigt.

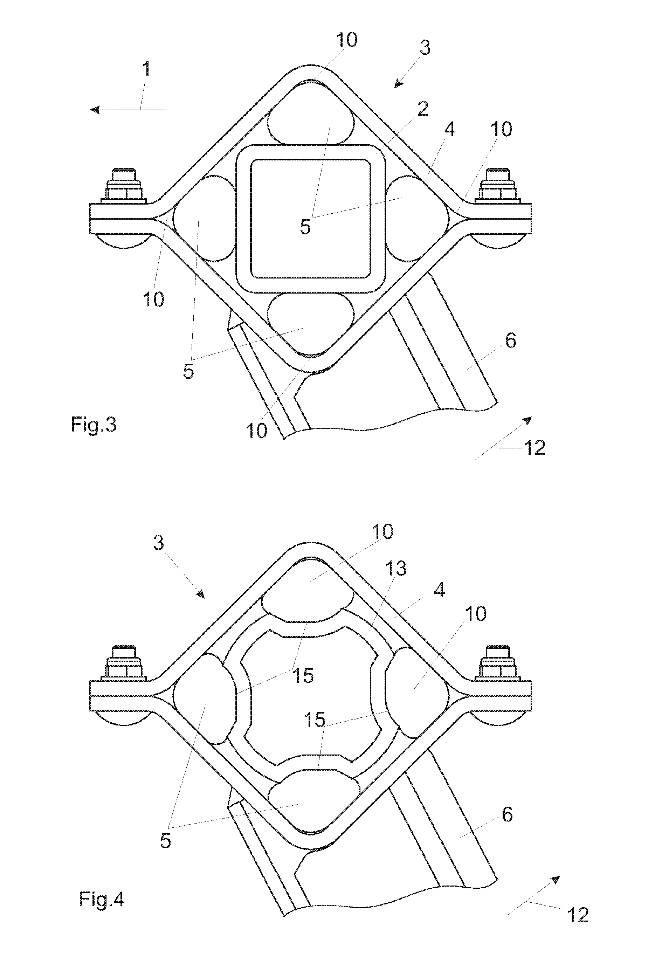

Der als Querträger ausgebildete Schwenkarmträger 13 gemäß Fig. 4 weist in dem Bereich, in dem die elastischen Lagerkörper 5 angeordnet sind und/oder an ihm anliegen, zur Erzeugung einer linearen Federkennlinie 14, die in Fig. 6 mit gestrichelten Linien eingezeichnet ist, eine Außenkontur mit konkaven Krümmungen 15 auf. Somit ist die Innenkontur der Lagerkörper 4 und die Außenkontur 15 des Schwenkarmträgers 13 so aufeinander abgestimmt, dass die von den elastischen Lagerelementen 10 erzeugte Fehlerkraft bei Auslenkung des Schwenkarmes 6 im Pfeilrichtung 12 entgegen der Fahrtrichtung 1 sich kein progressiver Federkraftverlauf bei sich vergrößernder Auslenkung ergibt. Somit ergibt sich bei der Auslenkung des Schwenkarmes 6 im Pfeilrichtung 12 gegen die Fahrtrichtung 1 ein zumindest annähernd linearer Federkraftverlauf bei sich vergrößernder Auslenkung des Schwenkarmes 6.

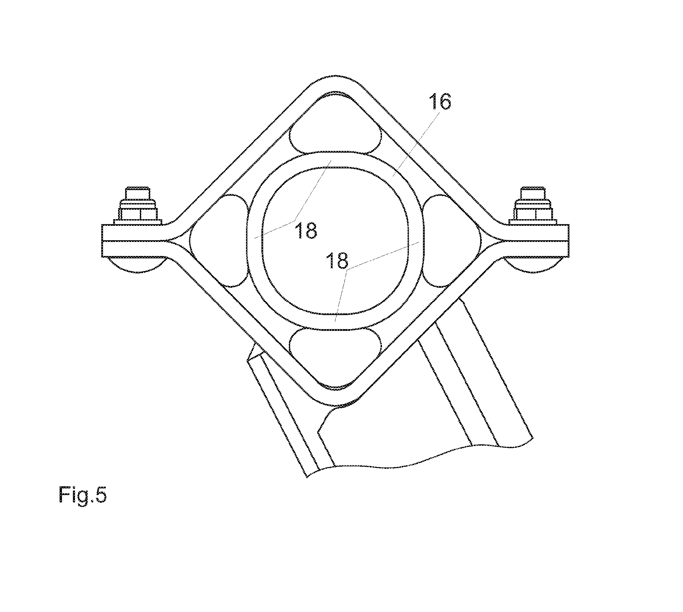

Der als Querträger ausgebildete Schwenkarmträger 16 gemäß Fig. 5 weist in dem Bereich, in dem die elastischen Lagerkörper 5 angeordnet sind und/oder an ihm anliegen, zur Erzeugung einer linearen Federkennlinie 17, die in Fig. 6 mit gestrichelten Linien eingezeichnet ist, eine Außenkontur mit konvexen Krümmungen 18 auf. Somit ist die Innenkontur der Lagerkörper 4 und die Außenkontur 18 des Schwenkarmträgers 16 so aufeinander abgestimmt, dass die von den elastischen Lagerelementen 10 erzeugte Fehlerkraft bei Auslenkung des Schwenkarmes 6 im Pfeilrichtung 12 entgegen der Fahrtrichtung 1 sich kein progressiver Federkraftverlauf bei sich vergrößernder Auslenkung ergibt. Somit ergibt sich bei der Auslenkung des Schwenkarmes 6 im Pfeilrichtung 12 gegen die Fahrtrichtung 1 ein zumindest annähernd degressiver Federkraftverlauf bei sich vergrößernder Auslenkung des Schwenkarmes 6.

## Patentansprüche

1. Aufhängungsvorrichtung einer Landmaschine zur Aufhängung eines Maschinenteiles, insbesondere eines Bodenbearbeitungswerkzeuges, mit zumindest einem das Maschinenteil tragenden Schwenkarm sowie einem sich vorzugsweise quer zur Arbeitsrichtung erstreckenden Schwenkarmträger, an dem der Schwenkarm mit einem Lagerkörper schwenkbar gelagert ist, wobei der Lagerkörper den Schwenkarmträger umgreift und zwischen dem Lagerkörper und den davon umgegriffenen Abschnitt des Schwenkarmträgers zumindest ein elastisches Lagerelement vorgesehen ist, dass sich mit seiner Längsachse im wesentlichen parallel zu der Schwenkachse des Schwenkarmes unter der Längsachse der Schwenkarmträger erstreckt und durch Schwenkbewegungen des Schwenkarmes eine zumindest teilweise Verformung erfährt, **dadurch gekennzeichnet, dass** die Innenkontur der Lagerkörper und die Außenkontur (15, 18) des Schwenkarmträgers (6) so aufeinander abgestimmt sind, dass die von den elastischen Lagerelementen (5) erzeugte Federkraft bei Auslenkung des Schwenkarmes (6) entgegen der Fahrtrichtung (1) sich kein progressiver Federkraftverlauf (14, 17) bei sich vergrößernder Auslenkung ergibt.

2. Aufhängungsvorrichtung nach Anspruch eins, **dadurch gekennzeichnet, dass** bei Auslenkung des Schwenkarmes (6) entgegen der Fahrtrichtung (1) sich ein zumindest annähernd linearer Federkraftverlauf (14) bei sich vergrößernder Auslenkung ergibt.

3. Aufhängungsvorrichtung nach Anspruch eins, **dadurch gekennzeichnet, dass** sich bei Auslenkung des Schwenkarmes (6) entgegen der Fahrtrichtung (1) sich ein degressiver Federkraftverlauf (17) bei sich vergrößernder Auslenkung ergibt.

4. Aufhängungsvorrichtung nach Anspruch eins, **dadurch gekennzeichnet, dass** der Schwenkarmträger (2) in dem Bereich, in dem die elastischen Lagerkörper (5) an ihm anliegen, zur Erzeugung einer degressiven Federkennlinie (17) eine konvexe Krümmung (18) aufweisen.

5. Aufhängungsvorrichtung nach Anspruch eins, **dadurch gekennzeichnet, dass** der Schwenkarmträger (2) in dem Bereich, in dem die elastischen Lagerkörper (5) an ihm anliegen, zur Erzeugung einer linearen Federkennlinie (14) eine konkave Krümmung (15) aufweisen.
